# EUROPEAN PATENT SPECIFICATION

(11) **EP 2 451 155 B1**
(45) Date of publication and mention of the grant of the patent: **10.08.2016**
(21) Application number: 12154280.7
(22) Date of filing: 28.06.2005
(51) Int. Cl.: H04N 21/83, H04N 21/2362, H04N 21/2389, H04N 21/433

(54) **SYSTEM FOR PROVIDING ACCESS TO INFORMATION NEEDED FOR PERFORMING TRICK MODE OPERATIONS ON A VIDEO ELEMENTARY STREAM**
SYSTEM ZUR BEREITSTELLUNG VON INFORMATIONEN ZUR DURCHFÜHRUNG VON TRICK-MODUS-OPERATIONEN AUF EINEM ELEMENTAREN VIDEODATENSTROM
SYSTEME DONNANT ACCES A DES INFORMATIONS NÉCESSAIRES POUR EFFECTUER DES OPERATIONS DE TYPE TRICK-MODE SUR UN FLUX VIDEO ELEMENTAIRE.

(30) Priority: 16.08.2004 US 601890 P; 16.08.2004 GB 0418279
(43) Date of publication of application: 09.05.2012
(62) Divisional of application: 05754983.4
(73) Proprietor: NDS Limited, Staines, Middlesex TW18 4EX (GB)
(72) Inventor: Murray, Kevin, Fordingbridge, Hampshire SP6 1DB (GB); Darshan, Ezra, Nofei Aviv (IL); Fink, David, 90435 Efrat (IL)
(74) Representative: Watterson, Peer Marten John

(56) References cited:
- EP-A- 0 674 440
- EP-A- 1 122 728
- "Information technology - Generic coding of moving pictures and associated audio information: Systems; H.222.0 (07/95)", ITU-T STANDARD SUPERSEDED (S), INTERNATIONAL TELECOMMUNICATION UNION, GENEVA, CH, no. H.222.0 (07/95), 10 July 1995 (1995-07-10), XP017401293,
- CURET D ET AL: "FlexMux & RTP & RTCP", JOINT VIDEO TEAM (JVT) OF ISO/IEC MPEG & ITU-T VCEG(ISO/IEC JTC1/SC29/WG11 AND ITU-T SG16 Q6), XX, XX, no. M5210, 28 September 1999 (1999-09-28), XP030034412,
- HOFFMAN G FERNANDO SUN MICROSYSTEMS D ET AL: "RTP Payload Format for MPEG1/MPEG2 Video; rfc2250.txt", IETF STANDARD, INTERNET ENGINEERING TASK FORCE, IETF, CH, 1 January 1998 (1998-01-01), XP015008034, ISSN: 0000-0003

## Description

### FIELD OF THE INVENTION

The present invention relates to apparatus and methods for providing access to content in a data stream.

### BACKGROUND OF THE INVENTION

One key aspect of the efficient operation of PVRs (Personal Video Recorders) that record a digital television signal is the ability to quickly, easily, and reliably identify places within a recorded video stream that correspond to starts and ends of pictures, locations of certain picture types, and a time associated with a picture. All of the places within the recorded video stream that correspond to the starts and ends of pictures; locations of certain picture types; and time associated with the picture are typically carried as part of the digital video signal. However, the digital television signal is often encrypted (also termed "scrambled" in the art and throughout the present specification and claims) in order to ensure correct payment for access to the television signal. It is often desirable not to decrypt the television signal when the television signal is recorded; accessing the places within the recorded video stream that correspond to the starts and ends of pictures; locations of certain picture types; and time associated with the picture is therefore difficult. Even if the signal is decrypted upon recording, or is transmitted unencrypted, locating desired information can require searching through large amounts of the digital television signal, which can be a costly operation.

It is appreciated that while the following discussion concentrates on video based systems, the present invention can also be applied to other coding technologies such as audio or data coding systems. The use of the word "video" should not be taken as limiting the scope of the invention.

Newer video coding technologies, such as AVC (ISO/IEC 14496-10) make it even more important that the information is correctly signalled, since existing heuristic mechanisms for "guessing" the location, value and type of information are becoming ever more unreliable due to the changes in video coding technologies.

Digital video standards that are relevant to understanding the state of the art include the following published standards:
ISO/IEC 13818-1:2000, *MPEG-2 Systems Specification;*
ISO/IEC 13818-2:2000, *MPEG-2 Video Specification,* particularly Sections 6.3.3 and 6.3.8;
ISO/IEC 13818-1:2000/Amd.3:(2003), *Transport of AVC video data in MPEG-2 TS;*
ISO/IEC 14496-10:2003 *MPEG-4 AVC Video Specification,* particularly Sections 7.3.1, 7.4.1, Annex A, D.8.7, and D.9.7; and
Annex E of ETSI TS 101 154 V1.5.1 (2004-05), *Digital Video Broadcasting (DVB); Implementation guidelines for the use of Video and Audio Coding in Broadcasting Applications based on the MPEG-2 Transport Stream.*

Internet Engineering Task Force (IETF) Requests for Comment (RFCs) that are relevant to understanding the state of the art include the following published RFCs:
RFC 1889, *RTP: A Transport Protocol for Real-Time Applications;* and
RFC 1890, *RTP Profile for Audio and Video Conferences with Minimal Control.*

The following patent applications are believed to represent the state of the art:
PCT Patent Application PCT/IL00/00276 (published as WO 01/35669) of NDS Limited, and corresponding US Patent Application S/N 09/574,096 of Darshan et al; and
PCT Patent Application PCT/IL02/00534 (published as WO 03/010970) of NDS Limited, and corresponding US Patent Application S/N 10/479,373 of Darshan et al.

EP1122728 discloses recording an encryted video stream and an additional map file comprising information needed for performing trick mode operations on said encrypted video stream.

### SUMMARY OF THE INVENTION

The present invention, in preferred embodiments thereof, comprises apparatus and methods, typically implemented at a broadcast headend or other facility for data stream preparation, operative to extract information useful for efficient operation of devices such as PVRs from a digital signal prior to potential encryption thereof. The extracted information is then potentially placed in an unencrypted section of the data transmitted in a way that enables the receiving PVR (or other device) to easily locate and use the extracted information to identify locations of interest and the types of those locations.

There is thus provided in accordance with a preferred embodiment of the present invention providing a digital signal encoded, in accordance with a layered encoding scheme, in a plurality of layers, and extracting operation information from a first layer of encoding within the digital signal, and placing the extracted information in a data section in a second layer of encoding within the digital signal.

Further in accordance with a preferred embodiment of the present invention the digital signal includes a transport layer.

Still further in accordance with a preferred embodiment of the present invention the operation information is extracted from the transport layer.

Additionally in accordance with a preferred embodiment of the present invention the data section is not subject to encryption.

Moreover in accordance with a preferred embodiment of the present invention the data section is subject to encryption.

Further in accordance witch a preferred embodiment of the present invention the data section is encrypted in accordance with an encryption scheme different from an encryption scheme used to encrypt the first layer.

Still further in accordance with a preferred embodiment of the present invention the operation information includes at least one of a location and type of access unit, timing information, and rendering information.

Additionally in accordance with a preferred embodiment of the present invention the layered encoding scheme includes an MPEG- stream.

Moreover in accordance with a preferred embodiment of the present invention the layered encoding scheme includes an MPEG- stream.

Further in accordance with a preferred embodiment of the present invention the layered encoding scheme includes an I-frame.

Still further in accordance with a preferred embodiment of the present invention the layered encoding scheme includes a P-frame.

Additionally in accordance with a preferred embodiment of the present invention the layered encoding scheme includes a B-frame.

Moreover in accordance with a preferred embodiment of the present invention the data section is optimized for implementation in hardware.

Further in accordance with a preferred embodiment of the present invention the extracted information is placed in the second layer when the extracted information changes relative to an earlier version of the extracted information.

Still further in accordance with a preferred embodiment of the present invention the extracted information is placed in the second layer when the layered encoding scheme changes from a default pattern.

Additionally in accordance with a preferred embodiment of the present invention, the method includes transmitting the digital signal and the data section to a receiving device.

Moreover in accordance with a preferred embodiment of the present invention the receiving device includes a personal video recorder (PVR).

Further in accordance with a preferred embodiment of the present invention, the method includes utilizing the operation information at the receiving device.

Still further in accordance with a preferred embodiment of the present invention the utilizing includes at least one of the following identifying at least one location of interest, identifying a type of at least one location of interest, and performing a trick mode operation.

Additionally in accordance with a preferred embodiment of the present invention the trick mode operation includes at least one of the following fast forward, slow motion forward, fast reverse, slow motion reverse, freeze frame, and random access.

There is also provided in accordance with another preferred embodiment of the present invention utilizing operation information from a data section of the digital signal, the data section having been produced by extracting operation information from the digital signal, and placing the operation information in the data section, the data section being not subject to encryption and placing the operation information in a retrieval area.

Further in accordance with a preferred embodiment of the present invention the utilizing includes ensuring that correct video data is played back.

Still further in accordance with a preferred embodiment of the present invention the retrieval area includes an index table.

Additionally in accordance with a preferred embodiment of the present invention the extracting occurs when the digital signal is played back.

Moreover in accordance with a preferred embodiment of the present invention the extracting occurs when the digital signal is recorded.

Further in accordance with a preferred embodiment of the present invention the operation information includes at least one of a location and type of access unit, timing information, and rendering information.

Still further in accordance with a preferred embodiment of the present invention the data section is optimized for implementation in hardware.

There is also provided in accordance with a still another preferred embodiment of the present invention a method for providing access to operation information relating to a portion of a digital signal, the method including receiving a digital signal, the digital signal including a data section and at least one other section, the data section including operation information, utilizing the operation information, and placing the operation information in a retrieval area, wherein the one other section is encrypted, and the data section is not encrypted, and the one other section includes a copy of the operation information.

Further in accordance with a preferred embodiment of the present invention the utilizing includes ensuring that correct video data is played back.

Still further in accordance with a preferred embodiment of the present invention the retrieval area includes an index.

Additionally in accordance with a preferred embodiment of the present invention the extracting occurs when the digital signal is played back.

Moreover in accordance with a preferred embodiment of the present invention the extracting occurs when the digital signal is recorded.

Further in accordance with a preferred embodiment of the present invention the operation information includes at least a location and type of access unit, timing information, and rendering information.

Still further in accordance with a preferred embodiment of the present invention the data section is optimized for implementation in hardware.

There is also provided in accordance with a still another preferred embodiment of the present invention a digital signal provider providing an encoded digital signal, in accordance with a layered encoding scheme, in a plurality of layers, and an operation information extractor extracting operation information from a first layer of encoding within the digital signal, and placing the extracted information in a data section in a second layer of encoding within the digital signal.

There is also provided in accordance with a still another preferred embodiment of the present invention an operation information utilizer, utilizing operation information from a data section of the digital signal, the data section have been produced by an operation information extractor which extracts the operation information from the digital signal, and an operation information placer which places the operation information in the data section, the data section being not subject to encryption, and an operation information placer operative to place the operation information in a retrieval area.

There is also provided in accordance with a still another preferred embodiment of the present invention a digital signal receiver operative to receive the digital signal, the digital signal including a data section and at least one other section, the data section including operation information, an operation information utilizer, and an operation information placer, operative to place the operation information in a retrieval area, Wherein the one other section is encrypted, and the data section is not encrypted, and the one other section includes a copy of the operation information.

### BRIEF DESCRIPTION OF THE DRAWINGS

The present invention will be understood and appreciated more fully from the following detailed description, taken in conjunction with the drawing in which:
Fig. 1 is a simplified partly pictorial, partly block diagram illustration of a system for improving efficiency of location identification in a data stream, the system being constructed and operative in accordance with a preferred embodiment of the present invention; and
Fig. 2 and Fig. 3 are simplified flowchart illustrations of preferred methods of operation of the system of Fig. 1.

### DETAILED DESCRIPTION OF A PREFERRED EMBODIMENT

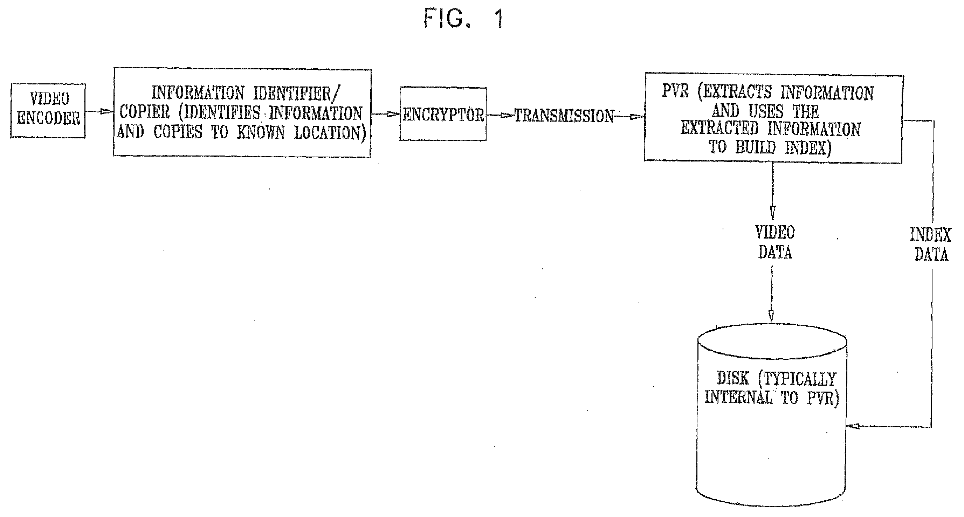

Reference is now made to Fig. 1, which is a simplified partly pictorial, partly block diagram illustration of a system for improving efficiency of location identification in a data stream, the system being constructed and operative in accordance with a preferred embodiment of the present invention. The system of Fig. 1 is self explanatory with reference to the discussion above and below.

Those skilled in the art will appreciate that the data stream preferably includes a transport layer. The transport layer preferably includes operation information. The operation information is preferably extracted from the transport layer. The extracted operation information is preferably placed in a data section. In some preferred embodiments of the present invention, the data section is preferably not subject to encryption. Alternatively, the data section preferably is subject to encryption. In some preferred embodiments of the present invention, the data section may preferably be encrypted using a different encryption scheme than the encryption scheme used to encrypt a video stream included in the digital signal.

The data section is preferably optimized for implementation in hardware, thereby making the data section easy to locate by a receiving device. For example, and without limiting the generality of the foregoing, in an MPEG-2 transport stream, a flag in a well known, fixed location would indicate the data section's presence. Typical examples of flags in a well known, fixed location which indicate the data section's presence include an adaptation field control flag and a transport private data flag in the adaptation field.

The operation information preferably includes at least one of:
a location and type of access unit;
timing information; and
rendering information.

It is appreciated that the digital signal may preferably transmitted to the receiving device, and may preferably be encoded using any appropriate layered encoding scheme, including, but not limited to, MPEG-2 and MPEG 4. It is further appreciated that the layered encoding scheme preferably includes at least one I-frame.

In some preferred embodiments of the present invention, extracted information may preferably be placed in the data section when a condition is met. For example, and without limiting the generality of the foregoing, information may be placed in the data section when the extracted information is changed. For example, and without limiting the generality of the foregoing, if the data stream includes a signal that video is encoded as either a field or as a frame, information signalling the change of encoding may be placed in the data section when there is a transition in video encoding from field to frame or vice-versa.

Similarly, information may be placed in the data section when encoding is changed from a given default encoding pattern. For example, and without limiting the generality of the foregoing, in many MPEG encoding schemes, frames are typically encoded in an IBBP pattern (an I-frame followed by two B-frames followed by a P-frame). If the encoding pattern changes to IBP, information signalling the change of encoding pattern may be placed in the data section.

It is appreciated that the digital signal may preferably be an encrypted digital signal. Alternatively, the digital signal preferably may not be encrypted.

Those skilled in the art will appreciate that the receiving device may preferably include a set-top box or personal video recorder (PVR). The receiving device preferably utilizes the operation information, wherein the utilizing includes at least one of:
identifying at least one location of interest;
identifying a type of at least one location of interest; and
performing a trick mode operation.

The utilizing and trick modes are described in greater detail below.

It is appreciated that, using the techniques described above, the present invention, in preferred embodiments thereof, enables the receiving device to utilize information without accessing the layer in which the information originally resided.

A preferred embodiment of the present invention suitable for use with MPEG-2 Systems (such as systems conforming to the ISO/IEC 13818-1:2000 specification, referred to above and incorporated herein by reference) is now described in more detail. It is appreciated that the MPEG-2 system is provided as a particular non-limiting example of an implementation of the present invention, and that the present invention may also be implemented in conjuction with other systems including, by way of further non-limiting example, IP based systems, such as RTP or DIRECTV Transport Protocol. In various parts of the description of the preferred embodiment of the present invention suitable for use with MPEG-2 Systems, details will be given which may be relevant for MPEG-4 Systems (ISO/IEC 14496-10:2003), and other systems as well.

In the case of MPEG-2 Systems (13818-1:2000), extracting information in accordance with the present invention is preferably achieved by placing a data structure in the user-private section of the adaptation layer data of the transport packet; persons skilled in the art will appreciate that the adaptation layer data is not encrypted. The presence of the adaptation layer data is signalled by a flag in the transport packet header (the adaptation field control flags), and the adaptation layer data itself (if more than one byte long) includes a flag (private data field flag) which signals the presence of private data. Thus it is a simple operation to identify the location of the desired information.

The exact format and frequency of the extracted information to be inserted can vary depending on the application, and the details of the video encoding algorithm(s) that are supported. As a non-limiting example, the table below shows one potential definition for the adaptation layer data, shown as a modification to the adaptation_fieid() structure defined in ISO/IEC 13818-1:2000 (see particularly section 2.4.3.5 and table 2-6).

In the table bellow:
MPEG_standard_field(s)/data refers to MPEG standard fields not discussed in detail in the table, in order to simplify the table;
transport_private_data_length refers to an MPEG-defined field including the length of the private data;
syntax_version indicates a version of the private data syntax. Preferably set to 0xB0. It is appreciated that Appendix E of ETSI TS 101 154 V1.5.1 (2004-05) describes a descriptor-like structure within a transport_private_data field of the adaptation field. Thus, the syntax_version value of 0xB0 has been chosen not to conflict with the tag values in ETSI TS 101 154V1.5.1;
stream-type = 1 refers to ISO/TEC 13818-2, and stream_type = 2 refers to ISO/IEC 14496-10, it being appreciated that these are provided as non-limiting examples only;
time_code_present, when set to 1, indicates that a time code of the immediately following picture is present in the private data;
PTS_32 refers to the 32 most significant bits of a 33-bit PTS (presentation time stamp, see ISO/IEC 13818-1 Section 2.1.39 and 2.4.3.7) encoded in a PES header immediately following the present adaptation field;
time_code () refers to an SMPTE time code value encoded in 24 bits. The format of the time_code () is almost identical to a 25-bit format specified for a MPEG-2 GOP header (ISO/IEC 13818-2 Section 6.3.8). However, the marker_bit field specified for the MPEG-2 GOP header is not used in the time_code() field;
picture_type refers to a type of an immediately following picture, where a value of 1 indicates an I-picture, a value of 2 indicates a P-picture and a value of 4 indicates a B-picture;
frame_rate_code refers to the frame rate of a stream carried on the present PID, encoded as in 6.3.3 of ISO/IEC 13818-2:2000;
profile_and_level_indication refers to a profile and level that is equal to or higher than any profile and level in any sequence in an associated video stream, encoded as in 6.3.3 of ISO/IEC 13818-2:2000;
profile_idc together with the level_idc field, indicates constraints in encoding of an AVC video stream, encoded as in ISO/IEC 14496-10:2003, Annex A;
level_idc together with the profile_idc field, indicates the constraints in encoding of the AVC video stream, encoded as in ISO/IEC 14496-10:2003, Annex A;
nal_ref_idc indicates whether the present frame is used for inter prediction of any other pictures, encoded as in ISO/IEC 14496-10:2003, sections 7.3.1 and 7.4.1; and
entry_point_frame_countt indicates how many subsequent frames must be decoded from the present point it is possible to reliably decode all subsequent frames. A value of 0 signifies that it is either unknown how many subsequent frames must be decoded from the present point or the number for frames which must be decoded from the present point is greater than a allowable maximum value. Frames for which the random_access_indicator is set will also have entry_point_frame_count equal to zero, since video can be reliably decoded from such frames.

It is appreciated that entry_point_frame_count is similar in concept to the recovery_point structure defined in ISO/IEC 14496-10:2003, sections D.8.7 andD.9.7.

**Table 1: Syntax for Adaptation Field**

| **Syntax** | **No. of Bits** | **Mnemonic** |
|---|---|---|
| adaptation_field () { | | |
| adaptation_field_length | 8 | uimsbf |
| MPEG standard fields | 6 | bslbf |
| transport_private_data_flag | 1 | '1' |
| MPEG standard field | 1 | |
| MPEG standard data | variable | |
| if (transport_private_data_flag = '1') { | | |
| transport_private_data_length | 8 | uimsbf |
| syntax-version | 8 | uimsbf |
| stream_type | 4 | uimsbf |
| reserved | 3 | '111' |
| time-code_present | 1 | |
| PTS_32 | 32 | uimsbf |
| if (time_code_present = '1') { | | |
| time_code () | 24 | |
| } | | |
| if (stream_type = '1' or '2') | | |
| picture_type | 4 | uismbf |
| frame_rate_code | 4 | uismbf |
| } | | |
| if (stream_type == '1') { | | |
| profile_and_level_indication | 8 | uismbf |
| } | | |
| else if (stream_type = '2') { | | |
| profile_idc | 8 | uismbf |
| level_idc | 8 | uismbf |
| nal_ref_idc | 2 | uismbf |
| entry_point_frame_count | 6 | uismbf |
| } | | |
| } | | |
| } | | |

The mnemonic "uimsbf' stands for: unsigned integer, most significant bit first, and the mnemonic "bslbf" stands for: bit string, left bit first (see ISO/IEC 13818-1, Section 2.2.6).

When a signal is recorded, the information described in Table 1 can be extracted and held in a separate index table to simplify access. Alternatively, the information can be extracted when the video is played back.

When the recorded video is played back, the extracted information, as described in the table above, is preferably used to ensure that the correct video data is played back. The indicated mechanism also supports such operations as "trick modes", which are currently difficult to implement with the newer coding technologies such as AVC (14496-10) without the presence of assistance information as is provided in preferred embodiments of the present invention. For example, and without limiting the generality of the foregoing, the systems described in US Patent Application S/N 09/574,096 of Darshan et al and US Patent Application S/N 10/479,373 of Darshan et al, referred to above and incorporated herein by reference, may be used to support trick mode operations.

The term "trick modes", in all its grammatical forms, as used throughout the present specification and claims includes, but is not limited to, one or more of the following: fast forward; slow motion forward; fast reverse; slow motion reverse; freeze frame; and random access. The term "random access" is used throughout the present specification and claims to refer both to random access to any particular point and to access to a specific predefined location or event, such as a next location or event, in a data stream.

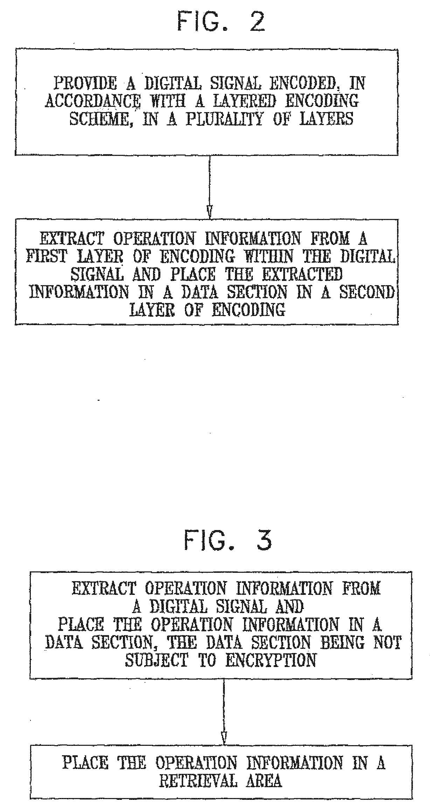

Reference is now made to Fig. 2 and Fig. 3, which are simplified flowchart illustrations of preferred methods of operation of the system of Fig. 1. The methods of Fig. 2 and Fig. 3 are believed to be self-explanatory with reference to the above discussion.

It is appreciated that various features of the invention which are, for clarity, described in the contexts of separate embodiments may also be provided in combination in a single embodiment. Conversely, various features of the invention which are, for brevity, described in the context of a single embodiment may also be provided separately or in any suitable subcombination. For example, each of the following subcombinations may be provided separately: the portion of the system and the associated methods described above as taking place at a broadcast headend or other facility for data stream preparation; and the portion of the system and the associated methods described above as taking place at a PVR or similar device.

It will be appreciated by persons skilled in the art that the present invention is not limited by what has been particularly shown and described hereinabove. Rather the scope of the invention is defined only by the claims which follow:

## Claims

1. A method for providing access to operation information relating to a digital television signal, the operation information comprising at least one of:
a location and type of access unit;
timing information; and
video decoding information,
the method comprising:
receiving an encoded digital television signal, encoded in accordance with a layered encoding scheme, in a plurality of layers comprising a first layer comprising an elementary video stream and a second layer comprising a transport stream, wherein the elementary video stream is encapsulated in the transport stream;
duplicating operation information from the elementary video stream; and
recording a copy of the duplicated operation information in a private data section of an adaptation field in the transport stream, wherein the duplicated operation information:
is recorded in the transport stream when the duplicated operation information changes relative to an earlier version of the duplicated operation information and is suitable for performing a trick mode operation on the first layer.

2. The method according to claim 1 and wherein the private data section is not encrypted.

3. The method according to any one of the preceding claims wherein the layered encoding scheme comprises one of: an MPEG-2 stream; and an MPEG-4 stream.

4. The method according to any one of the preceding claims and wherein the layered encoding scheme comprises at least one of: an I-frame; a P-frame; and a B-frame.

5. The method according to any one of the preceding claims wherein the duplicated operation information is recorded in the transport stream when an MPEG encoding scheme changes from a default pattern.

6. The method according to any one of the preceding claims also comprising:
transmitting the digital television signal and the private data section to a receiving device.

7. The method according to claim 6 wherein the receiving device comprises a personal video recorder (PVR).

8. The method according to claim 6 or claim 7 and also comprising:
utilizing the operation information at the receiving device to perform a trick mode operation.

9. The method according to claim 8 wherein the trick mode operation comprises at least one of the following: fast forward; slow motion forward; fast reverse; slow motion reverse; freeze frame; and random access.

10. A method for providing access to operation information relating to a recorded digital television signal comprising a first layer comprising an elementary video stream and a second layer comprising a transport stream, the elementary video stream being encapsulated in the transport stream, the operation information being comprised in a private data section of an adaptation field of the transport stream, the operation information comprising at least one of:
a location and type of access unit;
timing information; and
video decoding information,
the method comprising:
utilizing operation information from the private data section to perform a trick mode operation on the elementary video stream, the private data section having been produced by:
duplicating operation information from the elementary video stream; and
recording the operation information in the private data section, the private data section being not subject to encryption; and
recording a copy of the operation information in a retrieval area,
wherein the operation information is extracted from the private data section of the transport stream, the operation information relates to an operation information duplicated from said elementary video stream and recorded in the private data section; and is used to perform trick mode on the elementary video stream of digital television signal,_the duplicated operation information is placed in the retrieval area when the duplicated operation information changes relative to an earlier version of the duplicated operation information.

11. The method according to claim 10 wherein the retrieval area comprises an index table.

12. The method according to either claim 10 or claim 11 wherein the duplicating occurs when one of: the digital television signal is played back; and the digital television signal is recorded.

13. Apparatus for providing access to operation information relating to a digital television signal, the operation information comprising at least one of:
a location and type of access unit;
timing information; and
video decoding information,
the apparatus comprising:
a digital signal provider for receiving an encoded digital television signal, encoded in accordance with a layered encoding scheme, in a plurality of layers comprising a first layer comprising an elementary video stream and a second layer comprising a transport stream, wherein the elementary video stream is encapsulated in the transport stream; and
an operation information duplicator for duplicating operation information from the elementary, and recording a copy of the duplicated operation information in a private data section of an adaptation field in the transport stream of encoding within the digital television signal, wherein the duplicated operation information:
is recorded in the second layer when the duplicated operation information changes relative to an earlier version of the duplicated operation information; and is suitable for performing a trick mode operation on the first layer.

14. Apparatus for providing access to operation information relating to a recorded digital television signal comprising a plurality of layers comprising a first layer comprising an elementary video stream and a second layer comprising a transport stream, the elementary video stream being encapsulated in the transport stream, the operation information being comprised in a private data section of an adaptation field of the transport stream, the operation information comprising at least one of:
a location and type of access unit;
timing information; and
video decoding information,
the apparatus comprising:
an operation information utilizer utilizing operation information from the private data section to perform a trick mode operation on the first layer of the digital television signal, the private data section have been produced by:
an operation information duplicator which duplicates the operation information from the recorded digital television signal; and
an operation information recorder which records the operation information in the private data section, the private data section being not subject to encryption; and
an operation information recorder operative to record the operation information in a retrieval area,
wherein the operation information is extracted from the private data section, the operation information relates to an operation information duplicated from said first layer and recorded in the private data and is used to perform trick mode on the first layer of digital television signal, the operation information_the duplicated operation information is placed in the retrieval area when the duplicated operation information changes relative to an earlier version of the duplicated operation information.

## Patentansprüche

1. Verfahren zum Bereitstellen von Zugang zu Betriebsinformation, die sich auf ein Digitalfernsehsignal bezieht, wobei die Betriebsinformation mindestens eines von Folgendem umfasst:
einen Standort und einen Typ einer Zugangseinheit;
Zeitgebungsinformation; und
Videodecodierinformation,
wobei das Verfahren umfasst:
Empfangen eines codierten Digitalfernsehsignals, das gemäß einem geschichteten Codierschema codiert ist, in einer Vielzahl von Schichten, die eine erste Schicht, die einen elementaren Videostrom umfasst, und eine zweite Schicht, die einen Transportstrom umfasst, umfassen, wobei der elementare Videostrom im Transportstrom eingekapselt ist;
Duplizieren von Betriebsinformation von dem elementaren Videostrom; und
Aufzeichnen einer Kopie der duplizierten Betriebsinformation in einem Privatdatenabschnitt eines Anpassungsfeldes im Transportstrom, wobei die duplizierte Betriebsinformation:
in dem Transportstrom aufgezeichnet wird, wenn sich die duplizierte Betriebsinformation im Verhältnis zu einer früheren Version der duplizierten Betriebsinformation ändert und zum Durchführen einer Trickmodusoperation auf der ersten Schicht geeignet ist.

2. Verfahren nach Anspruch 1 und wobei der Privatdatenabschnitt nicht verschlüsselt ist.

3. Verfahren nach einem der verhergehenden Ansprüche, wobei das geschichtete Codierschema eines von einem MPEG-2-Strom und einem MPEG-4-Strom umfasst.

4. Verfahren nach einem der vorhergehenden Ansprüche und wobei das Codierschema mindestens eines von einem I-Frame, einem P-Frame und einem B-Frame umfasst.

5. Verfahren nach einem der vorhergehenden Ansprüche, wobei die duplizierte Betriebsinformation im Transportstrom aufgezeichnet wird, wenn sich ein MPEG-Codierschema von einem Vorgabemuster ändert.

6. Verfahren nach einem der vorhergehenden Ansprüche, außerdem umfassend:
Übertragen des Digitalfernsehsignals und des Privatdatenabschnitts zu einem Empfangsgerät.

7. Verfahren nach Anspruch 6, wobei das Empfangsgerät einen persönlichen Videorecorder (PVR) umfasst.

8. Verfahren nach Anspruch 6 oder 7 und außerdem umfassend:
Nutzen der Betriebsinformation im Empfangsgerät, um eine Trickmodusoperation durchzuführen.

9. Verfahren nach Anspruch 8, wobei die Trickmodusoperation mindestens eines von Folgendem umfasst: schneller Vorlauf; Zeitlupenvorlauf; schneller Rücklauf; Zeitlupenrücklauf; Standbild; und wahlfreier Zugriff.

10. Verfahren zum Bereitstellen von Zugang zu Betriebsinformation, die sich auf ein aufgezeichnetes Digitalfernsehsignal bezieht, das eine erste Schicht, die einen elementaren Videostrom umfasst, und eine zweite Schicht, die einen Transportstrom umfasst, umfasst, wobei der elementare Videostrom im Transportstrom eingekapselt ist, wobei die Betriebsinformation in einem Privatdatenabschnitt eines Anpassungsfeldes des Transportstroms enthalten ist, wobei die Betriebsinformation mindestens eines von Folgendem umfasst:
einen Standort und einen Typ einer Zugangseinheit;
Zeitgebungsinformation; und
Videodecodierinformation,
wobei das Verfahren umfasst:
Nutzen von Betriebsinformation aus dem Privatdatenabschnitt, um eine Trickmodusoperation auf dem elementaren Videostrom durchzuführen, wobei der Privatdatenabschnitt erzeugt worden ist durch:
Duplizieren von Betriebsinformation von dem elementaren Videostrom; und
Aufzeichnen der Betriebsinformation in dem Privatdatenabschnitt, wobei der Privatdatenabschnitt keiner Verschlüsselung unterliegt; und
Aufzeichnen einer Kopie der Betriebsinformation in einem Abrufbereich,
wobei die Betriebsinformation aus dem Privatdatenabschnitt des Transportstroms extrahiert wird, wobei die Betriebsinformation sich auf eine Betriebsinformation bezieht, die aus dem elementaren Viedostrom dupliziert und im Privatdatenabschnitt aufgezeichnet wurde, und dafür verwendet wird, eine Trickmodusoperation auf dem elementaren Videostrom des Digitalfernsehsignals durchzuführen, wobei die duplizierte Betriebsinformation im Abrufbereich platziert wird, wenn die duplizierte Betriebsinformation sich im Verhältnis zu einer früheren Version der duplizierten Betriebsinformation ändert.

11. Verfahren nach Anspruch 10, wobei der Abrufbereich eine Indextabelle umfasst.

12. Verfahren nach Anspruch 10 oder Anspruch 11, wobei das Duplizieren stattfindet, wenn eines von Folgenden zutrifft: das Digitalfernsehsignal wird abgespielt und das Digitalfernsehsignal wird aufgezeichnet.

13. Vorrichtung zum Bereitstellen von Zugang zu Betriebsinformation, die sich auf ein Digitalfernsehsignal bezieht, wobei die Betriebsinformation mindestens eines von Folgendem umfasst:
einen Standort und einen Typ einer Zugangseinheit;
Zeitgebungsinformation; und
Videodecodierinformation,
wobei die Vorrichtung umfasst:
einen Digitalsignalbereitsteller zum Empfangen eines codierten Digitalfernsehsignals, das gemäß einem geschichteten Codierschema codiert ist, in einer Vielzahl von Schichten, die eine erste Schicht, die einen elementaren Videostrom umfasst, und eine zweite Schicht, die einen Transportstrom umfasst, umfassen, wobei der elementare Videostrom im Transportstrom eingekapselt ist; und
einen Betriebsinformationsduplizierer zum Duplizieren von Betriebsinformation von dem elementaren Videostrom und Aufzeichnen einer Kopie der duplizierten Betriebsinformation in einem Privatdatenabschnitt eines Anpassungsfeldes im Transportstrom des Codierens innerhalb des Digitalfernsehsignals, wobei die duplizierte Betriebsinformation:
in der zweiten Schicht aufgezeichnet wird, wenn sich die duplizierte Betriebsinformation im Verhältnis zu einer früheren Version der duplizierten Betriebsinformation ändert und zum Durchführen einer Trickmodusoperation auf der ersten Schicht geeignet ist.

14. Vorrichtung zum Bereitstellen von Zugang zu Betriebsinformation, die sich auf ein aufgezeichnetes Digitalfernsehsignal bezieht, das eine Vielzahl von Schichten umfasst, die eine erste Schicht, die einen elementaren Videostrom umfasst, und eine zweite Schicht, die einen Transportstrom umfasst, umfassen, wobei der elementare Videostrom im Transportstrom eingekapselt ist, wobei die Betriebsinformation in einem Privatdatenabschnitt eines Anpassungsfeldes des Transportstroms enthalten ist, wobei die Betriebsinformation mindestens eines von Folgendem umfasst:
einen Standort und einen Typ einer Zugangseinheit;
Zeitgebungsinformation; und
Videodecodierinformation,
wobei die Vorrichtung umfasst:
einen Betriebsinformationsnutzer zum Nutzen von Betriebsinformation aus dem Privatdatenabschnitt, um eine Trickmodusoperation auf der ersten Schicht des Digitalfernsehsignals durchzuführen, wobei der Privatdatenabschnitt erzeugt worden ist durch:
einen Betriebsinformationsduplizierer, der die Betriebsinformation von dem aufgezeichneten Digitalfernsehsignal dupliziert; und
einen Betriebsinformationsaufzeichner, der die Betriebsinformation in dem Privatdatenabschnitt aufzeichnet, wobei der Privatdatenabschnitt keiner Verschlüsselung unterliegt; und
einen Betriebsinformationsaufzeichner, der betriebsfähig ist, die Betriebsinformation in einem Abrufbereich aufzuzeichnen,
wobei die Betriebsinformation aus dem Privatdatenabschnitt extrahiert wird, die Betriebsinformation sich auf eine Betriebsinformation bezieht, die von der ersten Schicht dupliziert und in dem Privatdatenabschnitt aufgezeichnet und verwendet wird, um einen Trickmodus auf der ersten Schicht des Digitalfernsehsignals durchzuführen, wobei die Betriebsinformation der duplizierten Betriebsinformation in dem Abrufbereich platziert wird, wenn die duplizierte Betriebsinformation sich im Verhältnis zu einer früheren Version der duplizierten Betriebsinformation ändert.

## Revendications

1. Procédé destiné à fournir un accès à des informations d'exploitation relatives à un signal de télévision numérique, les informations d'exploitation comprenant au moins l'un des éléments ci-après :
un emplacement et un type d'unité d'accès ;
des informations de temporisation ; et
des informations de décodage vidéo,
le procédé comprenant :
la réception d'un signal de télévision numérique codé, lequel est codé selon un schéma de codage en couches, dans une pluralité de couches comprenant une première couche comportant un flux vidéo élémentaire et une seconde couche comportant un flux de transport, le flux vidéo élémentaire étant encapsulé dans le flux de transport ;
la duplication d'informations d'exploitation à partir du flux vidéo élémentaire ; et
l'enregistrement d'une copie des informations d'exploitation dupliquées dans une section de données privées d'un champ d'adaptation dans le flux de transport, dans lequel les informations d'exploitation dupliquées :
sont enregistrées dans le flux de transport lorsque les informations d'exploitation dupliquées évoluent relativement à une version antérieure des informations d'exploitation dupliquées et sont appropriées pour mettre en oeuvre un fonctionnement en mode truquage sur la première couche.

2. Procédé selon la revendication 1 et dans lequel la section de données privées n'est pas chiffrée.

3. Procédé selon l'une quelconque des revendications précédentes, dans lequel le schéma de codage en couches comprend l'un parmi un flux MPEG-2 et un flux MPEG 4.

4. Procédé selon l'une quelconque des revendications précédentes et dans lequel le schéma de codage en couches comprend au moins l'une parmi une trame I, une trame P et une trame B.

5. Procédé selon l'une quelconque des revendications précédentes, dans lequel les informations d'exploitation dupliquées sont enregistrées dans le flux de transport lorsqu'un schéma de codage MPEG évolue à partir d'un modèle par défaut.

6. Procédé selon l'une quelconque des revendications précédentes, comprenant en outre :
la transmission du signal de télévision numérique et de ladite section de données privées à un dispositif de réception.

7. Procédé selon la revendication 6, dans lequel le dispositif de réception comprend un enregistreur vidéo personnel (PVR).

8. Procédé selon la revendication 6 ou la revendication 7 et comprenant en outre :
l'utilisation des informations d'exploitation au niveau du dispositif de réception en vue de mettre en oeuvre un fonctionnement en mode truquage.

9. Procédé selon la revendication 8, dans lequel le fonctionnement en mode truquage comprend au moins l'une des opérations suivantes : une avance rapide ; un ralenti avant ; un retour rapide ; un ralenti carrière ; un arrêt sur image ; et un accès aléatoire.

10. Procédé destiné à fournir un accès à des informations d'exploitation relatives à un signal de télévision numérique enregistré comprenant une première couche comportant un flux vidéo élémentaire et une seconde couche comportant un flux de transport, le flux vidéo élémentaire étant encapsulé dans le flux de transport, les informations d'exploitation étant incluses dans une section de données privées d'un champ d'adaptation du flux de transport, les informations d'exploitation comprenant au moins l'un des éléments ci-après :
un emplacement et un type d'unité d'accès,
des informations de temporisation ; et
des informations de décodage vidéo,
le procédé comprenant :
l'utilisation d'informations d'exploitation provenant de ladite section de données privées en vue de mettre en oeuvre un fonctionnement en mode truquage sur le flux vidéo élémentaire, la section de données privées ayant été produite par :
la duplication d'informations d'exploitation provenant du flux vidéo élémentaire ; et
l'enregistrement des informations d'exploitation dans la section de données privées, ladite section de données privées n'étant pas soumise à un chiffrement ; et
l'enregistrement d'une copie des informations d'exploitation dans une zone d'extraction ;
dans lequel les informations d'exploitation sont extraites à partir de la section de données privées du flux de transport, les informations d'exploitation étant relatives à des informations d'exploitation dupliquées à partir dudit flux vidéo élémentaire et enregistrées dans la section de données privées, et sont utilisées pour mettre en oeuvre un mode truquage sur le flux vidéo élémentaire d'un signal de télévision numérique, les informations d'exploitation dupliquées étant placées dans la zone d'extraction lorsque les informations d'exploitation dupliquées évoluent relativement à une version antérieure des informations d'exploitation dupliquées.

11. Procédé selon la revendication 10, dans lequel la zone d'extraction comprend une table d'index.

12. Procédé selon la revendication 10 ou la revendication 11, dans lequel la duplication se fait lorsqu'une des conditions ci-après est remplie : lecture du signal de télévision numérique et enregistrement du signal de télévision numérique.

13. Appareil destiné à fournir un accès à des informations d'exploitation relatives à un signal de télévision numérique, les informations d'exploitation comprenant au moins l'un des éléments ci-après :
un emplacement et un type d'unité d'accès,
des informations de temporisation ; et
des informations de décodage vidéo,
l'appareil comprenant :
un module de fourniture de signal numérique pour recevoir un signal de télévision numérique codé, lequel est codé selon un schéma de codage en couches, dans une pluralité de couches comprenant une première couche comportant un flux vidéo élémentaire et une seconde couche comportant un flux de transport, dans lequel le flux vidéo élémentaire est encapsulé dans le flux de transport ; et
un module de duplication d'informations d'exploitation pour dupliquer des informations d'exploitation à partir du flux vidéo élémentaire et enregistrer une copie des informations d'exploitation dupliquées dans une section de données privées d'un champ d'adaptation dans le flux de transport d'encodage dans le signal de télévision numérique, dans lequel les informations d'exploitation dupliquées :
sont enregistrées dans la seconde couche lorsque les informations d'exploitation dupliquées évoluent relativement à une version antérieure des informations d'exploitation dupliquées et sont appropriées pour mettre en oeuvre un fonctionnement en mode truquage sur la première couche.

14. Appareil destiné à fournir un accès à des informations d'exploitation relatives à un signal de télévision numérique enregistré comprenant une pluralité de couches comportant une première couche incluant un flux vidéo élémentaire et une seconde couche comprenant un flux de transport, le flux vidéo élémentaire étant encapsulé dans le flux de transport, les informations d'exploitation étant incluses dans une section de données privées d'un champ d'adaptation du flux de transport, les informations d'exploitation comprenant au moins l'un des éléments ci-après :
un emplacement et un type d'unité d'accès ;
des informations de temporisation ; et
des informations de décodage vidéo,
l'appareil comprenant :
un module d'utilisation d'informations d'exploitation utilisant les informations d'exploitation provenant de ladite section de données privées en vue de mettre en oeuvre un fonctionnement en mode truquage sur la première couche du signal de télévision numérique, ladite section de données privées ayant été produite par :
un module de duplication d'informations d'exploitation qui duplique les informations d'exploitation provenant du signal de télévision numérique enregistré ; et
un module d'enregistrement d'informations d'exploitation qui enregistre les informations d'exploitation dans la section de données privées, la section de données privées n'étant pas soumise à un chiffrement ; et
un module d'enregistrement d'informations d'exploitation exploitable de manière à enregistrer les informations d'exploitation dans une zone d'extraction ;
dans lequel les informations d'exploitation sont extraites à partir de la section de données privées, les informations d'exploitation étant relatives à des informations d'exploitation dupliquées à partir de ladite première couche et enregistrées dans les données privées, et sont utilisées pour mettre en oeuvre un mode truquage sur la première couche du signal de télévision numérique, les informations d'exploitation des informations d'exploitation dupliquées étant placées dans la zone d'extraction lorsque les informations d'exploitation duliquées évoluent relativement à une version antérieure des informations d'exploitation dupliquées.
